# EUROPEAN PATENT APPLICATION

(11) **EP 4 696 567 A1**
(43) Date of publication of application: **18.02.2026**
(21) Application number: 25192493.2
(22) Date of filing: 29.07.2025
(51) Int. Cl.: B60T 7/20, B60T 13/26, B60T 13/68, B60T 15/04, B60T 17/04, B60T 17/06, B60T 17/08, B60T 17/22

(54) **A TRAILER BRAKING SYSTEM**

(30) Priority: 05.08.2024 GB 202411490
(71) Applicant: Haldex AB, 261 24 Landskrona (SE)
(72) Inventor: HARRISON, Dudley, Warwickshire CV13 6DE (GB)
(74) Representative: Müller Schupfner & Partner Patent- und Rechtsanwaltspartnerschaft mbB (Muc)

(57) **Abstract**

A trailer braking system including:
a supply line (44) for connection to a continuous source of pressurised fluid;
a spring brake, which has an apply position and a release position, and the spring brake moves to the release position when pressurised fluid is provided at or above a threshold;
a spring brake control valve (10), which controls the flow of fluid to the spring brake;
an immobiliser (80) having a brake release position and an immobilise position, which control the flow of pressurised fluid to the spring brake control valve, such that when in the brake release position, the spring brake control valve is operable to cause the flow of pressurised fluid into the spring brake or to vent the spring brake chamber depending on the fluid pressure present, and when in the immobilise position, in which the spring brake control valve is not operable, and
a shunt valve (46') including a first port connectable to the supply line, a second port connectable to the spring brake control valve, a third port connectable to a brake reservoir (40), and a fourth port connectable to the immobiliser, the shunt valve having a first and second state, wherein in the first state, the first and second ports are connected, and in the second state, the second and fourth ports are connected to the third port.

## Description

### FIELD

The invention relates to a trailer braking system. In embodiments, the invention is used in a trailer that is connectable to a towing vehicle.

### BACKGROUND

Heavy goods vehicle made up of a towing vehicle and a trailer are well known. It is extremely important that when such a vehicle is parked and /or a trailer is left without a towing vehicle, the vehicle / trailer are held stationary to reduce the risk of injuries and / or death to persons in the immediately vicinity. Park brakes achieve this to some extent as the spring brakes can be manually applied by a button present on the trailer side, which prevents any unwanted movement of the trailer.

Embodiments of the present invention aim to alleviate one or more of problems or drawbacks of known trailer systems.

### BRIEF DESCRIPTION OF THE INVENTION

According to a first aspect of the invention we provide a trailer braking system including:
a supply line for connection to a continuous source of pressurised fluid;
a spring brake, which has an apply position and a release position, and the spring brake moves to the release position when pressurised fluid is provided at or above a threshold;
a spring brake control valve, which controls the flow of fluid to the spring brake;
an immobiliser having a brake release position and an immobilise position, which control and/or controls the flow of pressurised fluid to the spring brake control valve, such that when in the brake release position, the spring brake control valve is operable to cause the flow of pressurised fluid into the spring brake or to vent the spring brake chamber depending on the fluid pressure present, and when in the immobilise position, in which the spring brake control valve in particular is not operable, and
a shunt valve including a first port connectable to the supply line, a second port connectable to the spring brake control valve, a third port connectable to a brake reservoir, and a fourth port connectable to the immobiliser, the shunt valve having a first and second state, wherein in the first state, the first and second ports are connected, and in the second state, the second and fourth ports are connected to the third port.

The spring brake my fluidly be connected to the spring brake control valve and/or the spring brake control valve my fluidly be connected to the supply line, in particular via the immobiliser.

In the immobiliser position, the spring brake chamber can be vented. In particular in the immobiliser position the spring brake control valve is not operable.

The shunt valve may include a fifth port providing a vent. When the shunt valve is in the first state, the fourth port may be connected to a vent / atmosphere. When the shunt valve is in the second state, the vent may be blocked / closed.

The trailer braking system may further include a control line. The control line may provide a service brake demand signal. The shunt valve may include a fifth port which is connectable to the control line. When the shunt valve is in the first state, the fourth port may be connected to the control line. When the shunt valve is in the second state, the connection to the control line may be blocked / closed.

The shunt valve may further include a manual actuator. The manual actuator may allow a user to change the shunt valve between the first and second states and / or vice versa.

The shunt valve may be biased to the first state. The manual actuator may require substantially constant pressure (i.e. pressure over a predetermined threshold) to maintain the shunt valve in the second state. Even if the shunt valve does not include a manual actuator, it may require a substantially constant pressure to maintain it in the second state.

When the shunt valve is in the second state, the first port may be blocked / closed. The fourth port may be connectable to a pneumatic control port of the immobiliser. The immobiliser may further include an inlet and an outlet. The inlet may be connectable to the supply line. The outlet may be connectable to the spring brake control valve and may also be connected to a second control port. The second port may be connectable to a pneumatic control port of the spring brake control valve. The second port may be connectable to the control port of the spring brake control valve via the immobiliser. The third port may be further connectable to an inlet of the spring brake control valve.

The immobiliser may further be connected, in particular through an outlet of the immobiliser, to the spring brake control valve. Especially, the outlet of the immobiliser may be connected to the control port of the spring brake control valve. In particular, the outlet of the immobiliser may be connected directly to the spring brake control valve.

Further the outlet of the immobiliser may be connected to the spring brake control valve, in particular, to the control port of the spring brake control valve, by/via an emergency braking override valve.

The emergency braking override valve may have a first and second inlet and an outlet, the first inlet is connected to the outlet of the immobiliser. The second inlet may be connected to an emergency apply line. The outlet of the emergency brake override valve may be connected to the control port of the spring brake valve. The emergency breaking override valve may have a first position in which the inlet is connected to the second port, and the third port is closed, and a second position in which the second inlet is connected to the outlet whilst the first inlet is closed. The emergency braking override valve maybe electrically operable by means of a solenoid. Mechanical biasing means may be provided to urge the emergency breaking override valve into the first position, in other words the emergency breaking override valve may be biased into its first position, when there is no signal provided from the solenoid. Movement of the emergency braking override valve from the first position to the second position may be achieved by the supply of electrical current to the solenoid.

An inlet of the spring break control valve may be connected to a supply line. Further, the inlet of the spring brake control valve may also be connected to pressurized fluids reservoir and the supply line, which connects to a pressurized fluid supply from a tractor / towing vehicle. The inlet of the spring brake control valve may be connected to the connecter whilst the supply line, which extends from the connecter through the shunned wolf to an the emergency supply line. The emergency supply line may extend to the inlet of the spring break valve and an electrically operatable emergency breaking override to the control port of the spring break control valve.

Two one-way check valves may be provided in the emergency apply line both being orientated to allow flow of fluid of the shunned wolf to the spring break control valve but prevent flow of fluid in the other direction along the emergency pipeline.

The second inlet of the emergency breaking override valve may be connected to the emergency supply line between the one-way check valves.

The trailer braking system may further include a park valve. The park valve may have a first position in which the supply line is connected to the spring brake control valve and a second position in which the spring brake control valve is vented. The second port of the shunt valve may be connectable to the spring brake control valve via the park valve.

The immobiliser may include a one-way valve. The one-way valve may be arranged such that when the immobiliser is in its brake release position, air is permitted to flow through the immobiliser to the spring brake control valve, and when in the immobilise position, the one-way valve is connected which allows air to travel away from the spring brake control valve but prevents air from flowing towards the spring brake control valve.

According to a second aspect of the invention we provide a trailer braking system including:
a supply line for connection to a continuous source of pressurised fluid;
a spring brake, which has an apply position and a release position, and the spring brake moves to the release position when pressurised fluid is provided at or above a threshold;
a spring brake control valve, which controls the flow of fluid to the spring brake;
an immobiliser having a brake release position and an immobilise position, which control the flow of pressurised fluid to the spring brake control valve, such that when in the brake release position, the spring brake control valve is operable to cause the flow of pressurised fluid into the spring brake or to vent the spring brake chamber depending on the fluid pressure present, and when in the immobilise position, in which the spring brake control valve is not operable, and
a shunt valve having a first state, in which the immobiliser is permitted to be in either the brake release position or the immobilise position, as required, and a second state in which the immobiliser is in the brake release position, and wherein the shunt valve is biased to the first state.

The second aspect of the invention might have/include the same or some of the features of the first aspect of the invention.

The shunt valve may include a manual actuator, which is operable to move the shunt valve between the first and second state. The manual actuator may require substantially constant pressure to maintain the second state.

The shunt valve may include a first port connectable to the supply line, a second port connectable to the spring brake control valve, a third port connectable to a brake reservoir, and a fourth port connectable to the immobiliser, the shunt valve having a first and second state, wherein in the first state, the first and second ports are connected, and in the second state, the second and fourth ports are connected to the third port.

A trailer braking system according to the second aspect of the invention may include any one or more features outlined with respect to the first aspect of the invention.

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a schematic view of a trailer braking system;
FIGURE 2 is a schematic view of part of a trailer braking system;
FIGURE 3 is a schematic view of a part of a trailer braking system embodying the disclosure; and
FIGURE 4 is a schematic view of parts of the trailer braking system embodying the disclosure.

### DETAILED DESCRIPTION OF THE DISCLOSURE

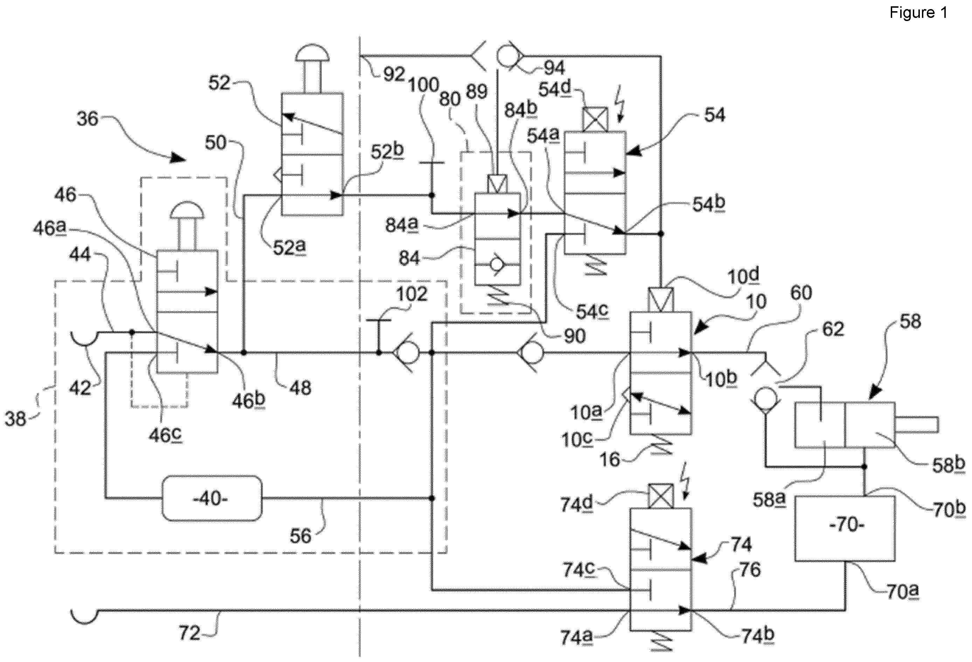

A braking system for a trailer vehicle is illustrated in figure 1. A brake actuator 58 is illustrated and has a spring brake chamber 58a and a service brake chamber 58b (both chambers are capable of imparting braking force on a connected wheel end). The spring brake (the braking force controlled by the spring brake chamber 58a) is applied when the fluid pressure (in this case, air) drops below a threshold and is released when the air pressure is at or above the threshold. In other words, the spring brake is on when there is low or no pressure in the chamber 58a and the spring brake is released (applying no braking force) when there is pressure present in the chamber 58a. The spring brake includes a resilient biasing element by means of which the braking force is applied when the pressure in the spring brake chamber 58a is below the predetermined level.

The service brake (the braking force controlled by the service brake chamber 58b) is applied according to the pressure present in the chamber 58b and is released when the air pressure is below a threshold. In other words, the service braking force developed is proportional to the pressure present in the chamber 58b.

The service brake is activated / released in accordance with driver (or electronic braking system (EBS)) demand. A control line 72 is connectable to the tractor and provides a fluid line to the driver's brake pedal. When the control line 72 is pressured (i.e. the driver has pressure applied to the brake pedal), a control valve assembly 70 (includes at least a modulator) operates to impart the desired pressure to the service brake chamber 58b (and, thus, the desired braking force is developed). The modulator has three configurations - a build state, a hold state and an exhaust state.

The build state is configured to increase the pressure delivered to the service brake chamber 58b. The hold state is configured to maintain a consistent pressure delivered. And, the exhaust state is configured to vent the pressure developed to atmosphere (and the delivered pressure to the chamber 58b drops to zero).

The modulator has a control port 70a for receipt of a fluid pressure braking demand signal (connected to the control line 72), a supply port (not shown) which is connected to a source of pressurised fluid, a delivery port 70b which is connected to the service brake chamber 58b, and an exhaust port (not shown) which vents to a low pressure region / atmosphere.

In the build state, the supply port is connected to the delivery port 70b whilst the exhaust port is closed (i.e. the pressure increases due to the connection to the supply port). In the hold state, the exhaust port and the supply ports are closed (i.e. the pressure is held stable with no additional pressure coming from the supply port). In the exhaust state, the delivery port 70b is connected to the exhaust port whilst the supply port is closed (i.e. the pressure will drop as all the air is vented).

Either the EBS or the driver (via the control line 72) can provide the control pressure at control port 70a of the control valve assembly 70 (along a service brake line 76). A brake apply valve 74 operates to connect either the control line 72 to the control valve assembly 70 or connects a constant supply of pressure from reservoir 40 to the control valve assembly 70. In this embodiment, the brake apply valve 74 is an electrically operated solenoid valve) and, in this example, is biased to connect the control line 72 to the control valve assembly 70). The brake apply valve 74 includes a first inlet 74a, an outlet 74b, a second inlet 74c and a control solenoid 74d. The control line 72 is connected to the first inlet 74a and the second inlet 74c is connected to the reservoir 40 via trailer reservoir supply line 56. The outlet 74b is connected to the control valve assembly 70.

The brake apply valve 74 is movable between a first position in which the first inlet 74a is connected to the outlet 74b, whilst the second inlet 74c is closed, and a second position in which the first inlet 74a is closed and the second inlet 74c is connected to the outlet 74b. The brake apply valve 74 is electrically operable, in this example, by means of a solenoid. Mechanical biasing means (in this example a spring) is provided to urge the brake apply valve 74 into the first position. Movement of the brake apply valve 74 from the first position to the second position is achieved by the supply of an electrical current to the solenoid 74d.

Thus, the driver demand pressure along the control line 72 is the default pressure delivered to the control valve assembly 70. However, the EBS can control the signal at port 74d in order to connect the trailer reservoir 40 the control valve assembly 70. This results in the EBS being operable to control the pressure going to the control valve assembly 70 - this is necessary so that the trailer can provide stability control automatically and independently of the driver demand for braking, for example.

The outlet 70b of the modulator 70 and an outlet from the spring brake control valve 10 are also connected to an anti-compounding valve 62. This is a two-way check valve which acts to connect whichever of the outlet of a spring brake control valve 10 (discussed below) or the outlet 70b of the modulator 70 is carrying the highest pressure to the spring brake chamber 58a. Such anti-compounding valves prevent the brakes being damaged by the simultaneous application of a braking force from the spring brake and service brake.

In embodiments, the spring brake control assembly includes a spring brake control valve 10. The spring brake control assembly may also include one or more of a park valve 52, a shunt valve 46 and an emergency braking override valve 54.

The spring brake control valve (SBCV) 10 operates to control the air pressure permitted to the spring brake chamber 58a. The SBCV 10 has an inlet 10a, an outlet 10b, an exhaust port 10c and a control port 10d. The inlet 10a connects to a source of pressurised fluid (coming via a shunt park assembly 38), the outlet 10b connects to the spring brake chamber 58a (via a spring brake line 60), and the exhaust port 10c is connected to a low pressure region (e.g. atmosphere).

The spring brake control valve 10 is movable between a first position where the inlet 10a is connected to the outlet 10b whilst the exhaust port 10c is closed, and a second position in which the outlet 10b is connected to the exhaust port 10c whilst the inlet 10a is closed.

The control port 10d is a fluid pressure operated actuator. The fluid pressure operated actuator being configured such that the supply of pressurised fluid to the control port 10d causes the spring brake control valve 10 to move to its first position. The spring brake control valve 10 also has a resilient biasing element 16 (e.g. a spring) which acts to urge the spring brake control valve 10 into its second position. When the fluid pressure at the control port 10d exceeds a pre-determined level / threshold, the spring brake control valve 10 moves positions, against the biasing force of the resilient biasing element 10, from the second position to the first position.

The inlet 10a is connected to the supply line 44. In this example, the inlet 10a of the spring brake control valve 10 is also connected to the pressurised fluid reservoir 40 and the supply line 44 (via connector 42) which connects to pressurised fluid supply from a tractor / towing vehicle. The inlet 10a of the spring brake control valve 10 is connected to the connector 42 via a supply line 44 which extends from the connector 42 through the shunt valve 46 to an emergency apply line 48 and a park line 50.

The emergency apply line 48 extends to the inlet 10a of the spring brake control valve 10, whilst the park line 50 extends through a park valve 52 (in the example in figure 1, the park valve 52 is manually operable but other park valve examples may have automatic or partially automatic operation) and an electrically operable emergency braking override valve 54 to the control port 10d.

Two one-way check valves are provided in the emergency apply line 48, both being oriented to allow flow of fluid from the shunt valve 46 to the spring brake control valve 10 but to prevent flow of fluid in the other direction along the emergency apply line 48, i.e. away from the spring brake control valve 10.

A trailer reservoir supply line 56 extends from the emergency apply line 48 in between the two one-way check valves to a pressurised fluid reservoir 40 mounted on the trailer. An outlet from the trailer reservoir 40 is connected to the shunt valve 46.

The emergency braking override valve 54 also has a first and second inlet 54a, 54c, and an outlet 54b. The first inlet 54a is connected to the park valve 52 (specifically, the outlet 52b). The second inlet 54c is connected to the emergency apply line 48 between the two one-way check valves. The outlet 54b is connected to the control port 10d of the spring brake control valve 10.

The emergency braking override valve 54 has a first position in which the inlet 54a is connected to the second port 54b, and the third port 54c is closed, and a second position in which the second inlet 54c is connected to the outlet 54b whilst the first inlet 54a is closed.

The emergency braking override valve 54 is electrically operable, in this example, by means of a solenoid 54d. Mechanical biasing means (in this example a spring) is provided to urge the emergency braking override valve 54 into the first position. In other words, the emergency braking override valve 54 is biased to its first position when there is no signal provided at the solenoid 54d. Movement of the emergency braking override valve 54 from the first position to the second position is achieved by the supply of an electrical current to the solenoid 54d.

The supply of electrical power to the emergency braking override valve 54 and the brake apply valve 74 is provided by a control unit (e.g. the trailer EBS control unit).

The immobiliser 80 is configured to prevent the trailer from rolling when it is disconnected from a towing vehicle. In general terms, the immobiliser 80 operates to move to an immobilise position automatically when pressure in the supply line 44 is lost (and the rest of the system vents, including the SBCV 10). Thus, the spring brake moves to a brake applied position and the immobiliser 80 also moves to the "immobilised" state when the pressure is lost in the supply line 44.

In more detail, the immobiliser 80 includes an immobiliser valve 84. The immobiliser valve 84 has an inlet 84a, an outlet 84b and a control port 89. A resilient biasing element 90 (e.g. a spring) is provided to urge the immobiliser valve 84 to a default position when the control port 89 is not in use. The inlet 84a is connected to the supply line 44 via the shunt and park valves 46, 52. The outlet 84b is connected to the control port 10d of the SBCV 10 via the emergency braking override valve 54. The control port 89 is a fluid pressure operated actuator. The outlet 84b is also connected to the control port 89 via the emergency braking override valve 54.

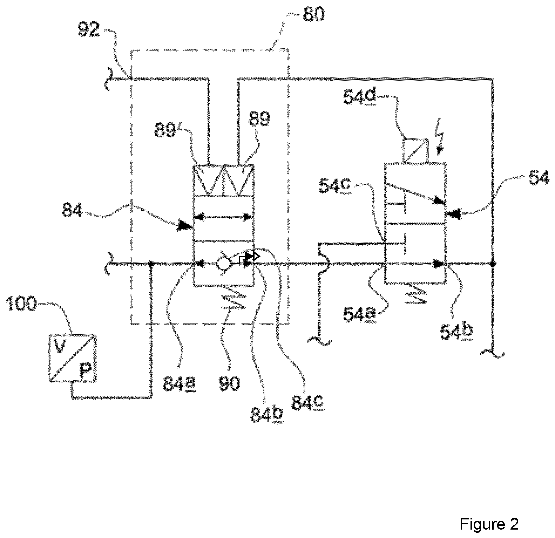

The immobiliser 80 has two states - a brake apply / active immobilisation state and a brake release / inactive state. The state illustrated in figure 2 is the inactive state in which the immobiliser 80 does not interfere or change the normal operation of the SBCV 10. The inlet 84a is connected to the outlet 84b - and thus, the supply line 44 pressure is permitted to flow to the control port 10d of the SBCV 10.

In the second state (the immobilisation state), the inlet 84a is connected to the outlet 84b via an internal check-valve. This prevents pressure on the supply line 44 from reaching the control port 10d of the SBCV 10 (and, thus, the spring brake cannot function to allow pressure through to the spring brake chamber 58a because the SBCV 10 is biased to vent by default). Furthermore, the biasing element 90 urges the immobiliser 80 to its immobilisation state, so once there is no fluid on the outlet 84b side of the valve, the immobiliser 80 cannot be repressurised merely by connecting the supply line 44 to a source of fluid.

In some embodiments, the line connected to the control port 89 of the immobiliser valve 84 includes a two-way check-valve 94. The check-valve 94 has two inlets and a single outlet, which operates automatically to allow the inlet with the larger pressure present to pass the pressure on to the outlet. One inlet is connected to the outlet 84b of the immobiliser valve 84 (as discussed above) and the other is connected to a port 92. Port 92 can be connected to an external source of fluid pressure - thus, a manual external input could be used to pressure the immobiliser valve 84 to its released state.

An alternative immobiliser 80 is illustrated in figure 2. The difference in this system is there is no double check valve connecting to the control 89 of the immobiliser valve 84. Instead, the immobiliser valve 84 is provided with two fluid pressure operated actuators 89, 89'. The first fluid pressure operated actuator 89 is connected as before (to the outlet 84b of the immobiliser valve 84 and, thus, to the control port 10d of the spring brake control valve 10) and operates in exactly the same way as above. In other words, it pushes the immobiliser valve 84 against the biasing force of the spring 90 into its brake release position when pressure is present at the control port 10d of the SBCV 10 / outlet 54b of the emergency braking override valve 54.

The second fluid pressure operated actuator 89' is connected to an alternative source of pressurised fluid via port 92 in the same way as is the second inlet of the two-way check valve 94 in system discussed above. Thus (as discussed above), the port 89' may be connected to the pressure delivered to the service brakes (i.e. from delivery port 70b). The second fluid pressure operated actuator 89' is configured to move the immobiliser valve 84 against the biasing force of the spring 90 into its brake release position when the pressure of fluid from the alternative source of pressurised fluid exceeds a pre-determined amount.

It should be appreciated that the system illustrated in figure 2 includes the same system components as discussed in relation to figure 1 (apart from the check-valve as discussed) but are not shown explicitly in figure 2.

It should also be appreciated that the immobiliser valve 84 may include an exhaust port attached to the check-valve 84c provided between the inlet 84a and the outlet 84b. Thus, when the immobiliser 80 moves to the active immobilisation state, the pressure on the outlet 84b side of the immobiliser valve 84 may automatically vent (and not be able to repressurise until the immobiliser 80 is operated to change states again). This is shown in figure 2.

The ability to shunt a trailer when it is disconnected from a towing vehicle may be particularly important. Shunting a trailer involves moving it only a small distance (e.g. across a warehouse or trailer yard) and is often used to repark a trailer in a desired position in a yard after a towing vehicle has delivered a trailer to a different position in the yard and departed. The system illustrated on figure 1 does not allow a proper shunt operation because the immobiliser 80 cannot be released without power and / or a supply of fluid.

The braking system illustrated in figure 1 includes such a shunt valve 46 and a park valve 52.

The shunt valve 46 includes a first inlet 46a, a second inlet 46c, an outlet 46b. The first inlet 46a is connected to the supply line 44, the second inlet 46c is connected to the reservoir 40 and the outlet 46b is connected to the inlet 10a of the SBCV 10. The shunt valve 46 has a first position in which the first inlet 46a is connected to the outlet 46b whilst the second inlet 46c is closed, and a second position in which the first inlet 46a is closed and the second inlet 46c is connected to the outlet 46b. In this example, the shunt valve 46 is adapted to be moved manually to the second position and automatically moves back to its first position when the supply line 44 is reconnected to a supply of pressure.

The park valve 52 includes an inlet 52a, an outlet 52b and an exhaust. The inlet 52a connects to the supply line 44 (in this embodiment, connects after the shunt valve 46, to emergency apply line 48). The outlet 52b connects to the control port 10d of the SBCV 10 via an immobiliser 80 and the emergency braking override valve 54 (both described in more detail below). The park valve 52 has a first position in which the inlet 52a is connected to the outlet 52b and a second position in which the inlet 52a is closed and the outlet 52b vents to a low pressure region (e.g. atmosphere). In this example, the park valve 52 is adapted to be moved manually between the first and second positions.

Thus, the park valve 52 is used when the trailer is parked and will remain so - a user depresses a manual actuator, so the park valve 52 is positioned in the second position. Thus, the SBCV 10 is isolated from the supply of pressure.

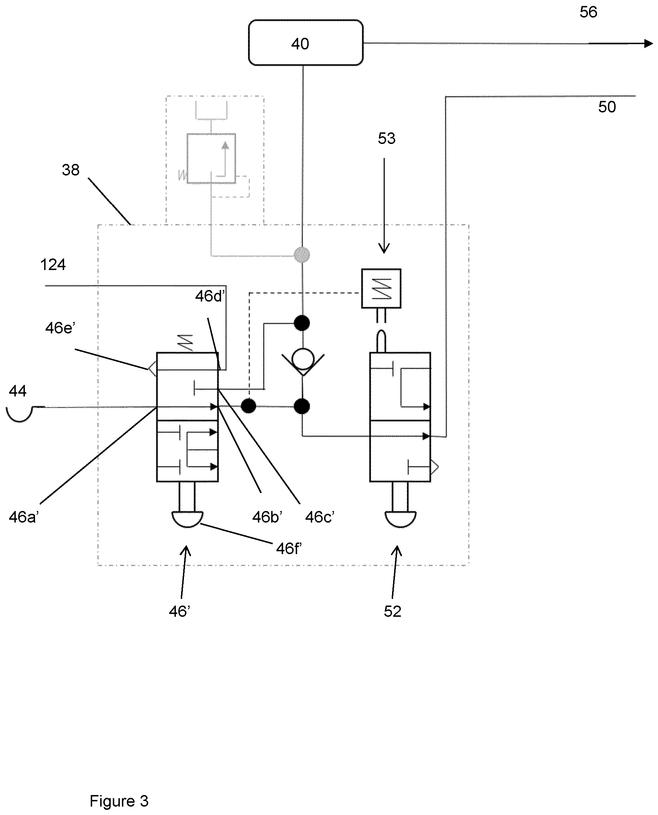

In some embodiments (e.g. figure 3), the park valve 52 includes a return device 53 that returns the park valve 52 from the second position to the first position. In the illustrated example, the return device 53 will apply an automatic return force when the supply line 44 is connected to a source of pressure. In other words, when the trailer is connected to a towing vehicle and ready to move on a journey, the park valve 52 will be forced to its first position (and air pressure will be permitted towards the spring brake 58a / spring brake control valve 10, which allows them to be released in the normal manner).

The shunt valve 46 is used to allow the spring brakes to release for only a short period of time (e.g. while the trailer is being moved around a yard or ship). A user depresses the manual actuator, so the reservoir 40 is connected to the SBCV 10. However, when the system includes immobiliser 80, the shunt functionality is difficult to utilise - the immobiliser 80 cannot be released without power and / or a supply of fluid. The ability to shunt a trailer when it is disconnected from a towing vehicle may be particularly important.

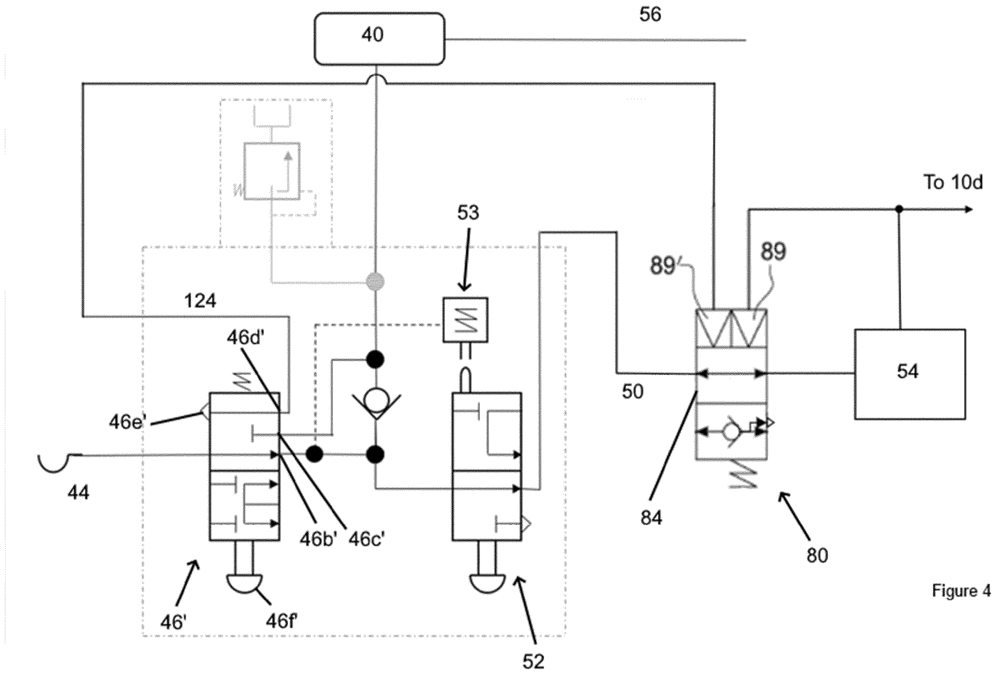

The system illustrated in figure 3 and 4 provides an alternative configuration which offers the ability to use the shunt valve 46' and include an immobiliser 80. Note that a prime is used to indicate a different shunt valve embodiment (i.e. shunt valve 46'). It should also be appreciated that other components discussed above (such as the SBCV 10 and brake chamber 58) are present but not illustrated.

In the illustrated embodiment, the shunt valve 46' includes four ports (46a' to 46d'), which are connectable to components of the braking system. Further, as can be seen in the embodiment of figure 3, a further vent 46e' is provided to allow a connection to atmosphere (i.e. a low pressure region).

In other words, the shunt valve 46' includes a first port 46a', a second port 46b', a third port 46c', and a fourth port 46d'. The connections are illustrated in figures 3 and 4. The first port 46a' is connectable to the supply line 44. The second port 46b' is connectable to the spring brake control valve 10. The third port 46c' is connectable to the brake reservoir 40. Lastly, the fourth port 46d' is connectable to the immobiliser 80 (along immobiliser line 124).

It should be appreciated that these connections could be direct or indirect. For example, the connection to the spring brake control valve 10 could be via a parking brake 52 (as is the case in the illustrated system). This allows additional functionality to be provided beyond what is discussed here.

In some embodiments (i.e. those with an immobiliser 80 as illustrated in figure 2), the fourth port 46d' of the shunt valve 46' is connectable to control port 89' of the immobiliser 80.

In some embodiments, the second port 46b' of the shunt valve 46' is connectable to the control port 10d of the spring brake control valve 10. In some embodiments (for example, the system illustrated in figure 4), the second port 46b' connects to the control port 10d of the spring brake control valve 10 via the immobiliser 80. As can be seen, the emergency braking override valve 54 is also positioned between the immobiliser 80 (i.e. the outlet 84b) and the control port 10d of the SBCV 10. In other words, both the immobiliser 80 and the emergency braking override valve 54 are located downstream of the shunt valve 46' (i.e. after the shunt valve 46' on the supply line) and upstream of the SBCV 10 (i.e. before the SBCV 10 and the spring brakes).

Further, in the illustrated example, the park valve 52 is also connected between the shunt valve 46' and the SBCV 10 (in this case, before the immobiliser 80).

In some embodiments, the third port 46c' connects to an inlet of the spring brake control valve 10. As can be seen in figure 4, the connection to the third part 46c' connects to the brake reservoir 40 and onwards along the trailer reservoir supply line 56 to the SBCV 10.

The shunt valve 46' has two states - a first state and a second state. When the shunt valve 46' is in the first state, the first and second ports 46a', 46b' are connected. In other words, the supply line 44 is connected to the spring brake control valve 10. This first state may be a default state in which the braking system operates as normal.

In embodiments, the third port 46c' is blocked and the fourth port 46d' is connected to the vent 46e' when the shunt valve 46' is in the first state. In other words, the reservoir 40 connection is closed and the immobiliser 80 is connected to atmosphere.

When the shunt valve 46' is in the second state, the second and fourth ports 46b', 46d' are connected to the third port 46c'. In other words, both the spring brake control valve 10 and the immobiliser 80 are connected to the brake reservoir 40. This second state may be a temporary state in which the immobiliser 80 is overridden (and the spring brakes can be released) and the trailer may be permitted to move (i.e. be shunted).

In embodiments, the first port 46a' and vent 46e' are blocked. Thus, the supply line 44 and vent connections are both closed.

In some embodiments, the shunt valve 46' further includes a manual actuator 46f'. The manual actuator 46f' allows a user to change the shunt valve 46' between the first and second states and / or vice versa.

In some embodiments, the shunt valve 46' is biased to the first state. In other words, if the shunt valve 46' is not otherwise maintained in its second state, the biasing will cause it to return to its first state automatically.

In the illustrated example, the manual actuator 46f' is the only mechanism by which the shunt valve 46' can be moved to the second state. Further, in order for the shunt valve 46' to remain in the second state, the manual actuator 46f' requires substantially constant pressure. In other words, the shunt valve 46' is manually actuated and held in its second state.

This construction of shunt valve 46' (and connections to the other components of the braking system) allows the braking system to operate in the following way.

In its "default" configuration, the shunt valve 46' is in the first state. The first and second ports 46a', 46b' are connected, which results in the supply line 44 connecting to the park line 50. This means that the immobiliser 80 is free to operate in its normal manner. In other words, the immobiliser 80 is free to move between its immobilise and brake release positions, which, in turn, controls how the SBCV 10 may operate.

In short, if the immobiliser 80 maintains the immobilise position, then the SBCV 10 does not (and cannot) pressurise and the spring brakes cannot be released. This can only be changed by operation of the emergency braking override valve 54. To move the immobiliser 80 to the brake release position, the emergency override valve 54 is activated (by a signal from the control unit within the system), which temporarily connects the brake reservoir 40 to the control port 89 of the immobiliser 80 - this permits the supply line connection to feed to the same control port 89 (and, thus, the immobiliser 80 is held in its released position). In the brake release position, the SBCV 10 operates to control the application and release of the spring brakes as desired.

When the vehicle is parked and the towing vehicle is disconnected from the trailer, the supply line is depressurised. This automatically leads to the immobiliser 80 moving to the immobilise position because the control port 89 is below the threshold to maintain the valve 84 in the released position.

It is when the trailer has been left (i.e. with no towing vehicle) that a shunt may be necessary to move the trailer a short distance. When the shunt valve 46' is moved to the second position (in the illustrated example, using the manual actuator 46f'), the brake reservoir 40 is connected to both the inlet of the immobiliser 80 (inlet 84a) and the control port 89' of the immobiliser 80. Essentially, the control port of the immobiliser 80 is pressurised (by the reservoir pressure), which permits the immobiliser 80 to move to the brake release position. Thus, the reservoir pressure is also permitted through the immobiliser 80. This subsequently pressurised the SBCV 10 and allows the spring brakes to be released. Thus, the trailer can be moved without damaging the spring brakes (i.e. without dragging the trailer with the brakes still applied).

In the case of the illustrated example, where the shunt valve 46' is biased, if the manual actuator 46f' is released, the shunt valve 46' will automatically return to the first state. Thus, disconnecting the reservoir 40 from the immobiliser control port 89 (and, thus, the SBCV 10) - this causes the spring brakes to be reapplied.

In an alternative (not illustrated) embodiment, the fifth port 46e' (the vent port 46e') provides a connection to the control line 72. As discussed above (and illustrated in figure 1), the control line 72 provide the service braking capability (i.e. to the brake demand from the tractor / towing vehicle or an automatic braking signal from an electronic control unit). In this example, the other ports of the shunt valve 46' are connected as already discussed. As such, the difference is that the when the shunt valve 46' is in its first position, the line 124 to the brake reservoir 40 is connected to the control line 72 rather than a vent. This allows a difference in functionality.

Of course, during normal operation of the trailer (i.e. when connected to the towing vehicle and / or undertaking a journey), the immobiliser 80 is held in a released state by the supply line 12 pressure. The service braking through the control line 72 occurs as desired (and as normal) to control the speed of the vehicle.

However, once the trailer is parked and disconnected from the towing vehicle (i.e. when the immobiliser 80 is moved to it immobilised position), there is a difference. The immobiliser 80 will be moved to its release state by an acceptable control line 72 connecting from a towing vehicle. In other words, once the control line 72 is pressurised, the immobiliser 80 will automatically release (no electronic signal from the ECU, through the override valve 54 is required).

In such a system, the immobiliser 80 becomes a safety device. In other words, the immobiliser 80 prevents the brakes being released in a dangerous condition (i.e. in the event that movement is attempted when the shunt valve 46' is not being manually operated or an acceptable connection on the control line 72 is not present). However, the immobiliser 80 does not prevent unauthorised movement of the trailer as long as the conditions for "safe" movement are met. In effect, this allows the immobiliser 80 to become a safety device since it may be overridden by an acceptable control line 72 brake demand. It will be appreciated that even in this embodiment, the shunt valve 46' still operates in the manner outlined further above when the trailer is parked without any control line 72 connection.

The present system is advantageous because it allows shunt functionality to be provided while an immobiliser is present. The system reduces the number of components (and the number / length on connecting lines) required to provide this functionality. Further, a sprung / bias shunt valve may be safer than other shunt valves because it must be subject to constant pressure to keep it enabled - the user must remain alongside the trailer while it is shunted and once the movement is complete (and the operator moves away), the trailer will automatically reapply the spring brakes.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Although certain example embodiments of the invention have been described, the scope of the appended claims is not intended to be limited solely to these embodiments. The claims are to be construed literally, purposively, and/or to encompass equivalents.

## Claims

1. A trailer braking system including:
a supply line for connection to a continuous source of pressurised fluid;
a spring brake, which has an apply position and a release position, and the spring brake moves to the release position when pressurised fluid is provided at or above a threshold;
a spring brake control valve, which controls the flow of fluid to the spring brake;
an immobiliser having a brake release position and an immobilise position, which control the flow of pressurised fluid to the spring brake control valve, such that when in the brake release position, the spring brake control valve is operable to cause the flow of pressurised fluid into the spring brake or to vent the spring brake chamber depending on the fluid pressure present, and when in the immobilise position, in which the spring brake control valve is not operable, and
a shunt valve including a first port connectable to the supply line, a second port connectable to the spring brake control valve, a third port connectable to a brake reservoir, and a fourth port connectable to the immobiliser, the shunt valve having a first and second state, wherein in the first state, the first and second ports are connected, and in the second state, the second and fourth ports are connected to the third port.

2. A trailer braking system according to claim 1 wherein when the shunt valve includes a fifth port providing a vent.

3. A trailer braking system according to claim 2 wherein when the shunt valve is in the first state, the fourth port is connected to a vent / atmosphere, and / or
wherein when the shunt valve is in the second state, the vent is blocked / closed.

4. A trailer braking system according to claim 1 wherein the system further includes a control line, which provides a service brake demand signal, and the shunt valve includes a fifth port connectable to a control line.

5. A trailer braking system according to claim 4 wherein when the shunt valve is in the first state, the fourth port is connected to the control line, and / or
wherein when the shunt valve is in the second state, the connection to the control line is blocked / closed.

6. A trailer braking system according to any one of the preceding claims wherein when the shunt valve is in the second state, the first port is blocked / closed, and/or
wherein the shunt valve further includes a manual actuator which allows a user to change the shunt valve between the first and second states and / or vice versa, and/or
wherein the shunt valve is biased to the first state, and/orwherein the manual actuator requires substantially constant pressure to maintain the shunt valve in the second state.

7. A trailer braking system according to any one of the preceding claims wherein the fourth port is connectable to a pneumatic control port of the immobiliser.

8. A trailer braking system according to claim 10 wherein the immobiliser further includes an inlet which is connectable to the supply line, an outlet which is connectable to the spring brake control valve and to a second control port.

9. A trailer braking system according to claim 10 or 11 wherein the second port is connectable to a pneumatic control port of the spring brake control valve.

10. A trailer braking system according to claim 8 wherein the second port is connectable to the control port of the spring brake control valve via the immobiliser.

11. A trailer braking system according to any one of the preceding claims wherein the third port is further connectable to an inlet of the spring brake control valve.

12. A trailer braking system according to any one of the preceding claims further including a park valve, which has a first position in which the supply line is connected to the spring brake control valve and a second position in which the spring brake control valve is vented.

13. A trailer braking system according to claim 15 wherein the second port of the shunt valve is connectable to the spring brake control valve via the park valve.

14. A trailer braking system according to any one of the preceding claims
wherein the immobiliser includes a one-way valve, arranged such that when the immobiliser is in its brake release position, air is permitted to flow through the immobiliser to the spring brake control valve, and when in the immobilise position, the one-way valve is connected which allows air to travel away from the spring brake control valve but prevents air from flowing towards the spring brake control valve.

15. A trailer braking system including:
a supply line for connection to a continuous source of pressurised fluid;
a spring brake, which has an apply position and a release position, and the spring brake moves to the release position when pressurised fluid is provided at or above a threshold;
a spring brake control valve, which controls the flow of fluid to the spring brake;
an immobiliser having a brake release position and an immobilise position, which control the flow of pressurised fluid to the spring brake control valve, such that when in the brake release position, the spring brake control valve is operable to cause the flow of pressurised fluid into the spring brake or to vent the spring brake chamber depending on the fluid pressure present, and when in the immobilise position, in which the spring brake control valve is not operable, and
a shunt valve having a first state, in which the immobiliser is permitted to be in either the brake release position or the immobilise position, as required, and a second state in which the immobiliser is in the brake release position, and wherein the shunt valve is biased to the first state.

16. A trailer braking system according to claim 15 wherein the shunt valve includes a manual actuator, which is operable to move the shunt valve between the first and second state, In particular wherein substantially constant pressure on the manual actuator is required to maintain the second state.

17. A trailer braking system according to any one of claims 15 to 16 wherein the shunt valve includes a first port connectable to the supply line, a second port connectable to the spring brake control valve, a third port connectable to a brake reservoir, and a fourth port connectable to the immobiliser, the shunt valve having a first and second state, wherein in the first state, the first and second ports are connected, and in the second state, the second and fourth ports are connected to the third port.

18. A trailer braking system according to any one of claims 15 to 17 wherein the braking system includes any one or more of claims 2 to 14.
